# EUROPÄISCHE PATENTANMELDUNG

(11) **EP 4 417 094 A1**
(43) Veröffentlichungstag der Anmeldung: **21.08.2024**
(21) Anmeldenummer: 24155586.1
(22) Anmeldetag: 02.02.2024
(51) Int. Cl.: A47J 31/60

(54) **VERFAHREN ZUR ENTKALKUNG EINES KAFFEEAUTOMATEN SOWIE KAFFEEAUTOMAT UND COMPUTERPROGRAMMPRODUKT**

(30) Priorität: 16.02.2023 DE 102023201354
(71) Anmelder: BSH Hausgeräte GmbH, 81739 München (DE)
(72) Erfinder: Schattkowski, Luka, 83224 Grassau (DE); Botros, Peter, 83301 Traunreut (DE); Daburger, Josef, 83313 Siegsdorf (DE)

(57) **Zusammenfassung**

Die Erfindung betrifft ein Verfahren zur Entkalkung eines Kaffeeautomaten (1), der ein Fluidsystem (2) mit mindestens zwei Fluidleitungen (2a, 2b), eine Erfassungseinrichtung (3) und eine Auswerte-/Steuereinrichtung (4) umfasst und bei dem eine routinemäßige Entkalkung durchgeführt wird, wobei die Erfassungseinrichtung (3) und die Auswerte-/Steuereinrichtung (4) datenübertragend verbunden sind, wobei für eine Entkalkung des Fluidsystems (2), insbesondere der zwei Fluidleitungen (2a, 2b), relevante Parameter von einer Erfassungseinrichtung (3) erfasst und an eine Auswerte-/Steuereinrichtung (4) übermittelt werden. Dabei wertet die Auswerte-/Steuereinrichtung (4) anhand der für die Entkalkung relevanten Parameter Anteile der routinemäßigen Entkalkung aus, und legt fest, welcher erste Anteil einer ersten Fluidleitung (2a) der mindestens zwei Fluidleitungen (2a, 2b) zugeteilt wird und welcher zweite Anteil einer zweiten Fluidleitung (2b) der mindestens zwei Fluidleitungen (2a, 2b) zugeteilt wird. Die Erfindung betrifft auch einen dementsprechend eingerichteten und programmierten Kaffeeautomaten (1) und ein, dementsprechende Befehle umfassendes, Computerprogrammprodukt.

## Beschreibung

Die vorliegende Erfindung betrifft ein Verfahren zur Entkalkung eines Kaffeeautomaten, der ein Fluidsystem mit mindestens zwei Fluidleitungen, eine Erfassungseinrichtung und eine Auswerte-/Steuereinrichtung umfasst und bei dem eine routinemäßige Entkalkung durchgeführt wird. Die Erfindung betrifft außerdem einen dementsprechend eingerichteten und programmierten Kaffeeautomaten sowie ein entsprechendes Computerprogrammprodukt.

Um Kaffeeautomaten langfristig fehlerfrei betreiben zu können, müssen diese turnusmäßig entkalkt werden. Der Abstand zwischen zwei einzelnen Entkalkungsvorgängen hängt dabei beispielsweise von einer Nutzungsintensität und/oder einer Wasserhärte ab. Hierzu werden Nutzer derartiger Kaffeeautomaten üblicherweise turnusmäßig aufgefordert, beispielsweise über eine entsprechende Anzeige an einem Display, oder aber der Kaffeeautomat startet einen derartigen Entkalkungsvorgang turnusmäßig selbsttätig. Um dabei eine ordnungsgemäße Entkalkung durchführen zu können, ist es erforderlich, dass beispielsweise ein hierfür geeignetes Entkalkungsmittel in der richtigen Dosierung und mit der richtigen Einwirkzeit gewählt wird.

Bei Kaffeeautomaten mit mehreren Fluidleitungen, z.B. einer Leitung zu einem Kaffeeauslass und einer Leitung zu einem Milchschaumauslass, werden üblicherweise alle Leitungen in jedem Turnus mit der gleichen vorab festgelegten Menge an Entkalkungsmittel beaufschlagt. Diese Mengen müssen so bemessen sein, dass in jedem Fall nach dem Entkalkungsvorgang alle Leitungen ordnungsgemäß entkalkt sind. Jedoch kann es vorkommen, dass an dem Kaffeeautomaten im letzten Turnus eine der Leitungen kaum oder überhaupt nicht verkalkt ist, weil z.B. nur Kaffee bezogen wurde und kein Milchschaum. In diesem Fall würde die für die Entkalkung der Leitung zum Milchschaumauslass verwendete Menge an Entkalkungsmittel in unnötiger Weise verschwendet, was nicht besonders nachhaltig ist.

Die vorliegende Erfindung beschäftigt sich daher mit der Aufgabe, ein Verfahren zur Entkalkung eines Kaffeeautomaten anzugeben, welches gleichermaßen eine langfristig einwandfreie Entkalkung gewährleistet und dabei besonders nachhaltig ist.

Diese Aufgabe wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer routinemäßigen Entkalkung eines Kaffeeautomaten eine unnötige Verschwendung von Entkalkungsmittel zu vermeiden. Der Kaffeeautomat umfasst dabei ein Fluidsystem mit mindestens zwei Fluidleitungen, nämlich einer ersten Fluidleitung und einer zweiten Fluidleitung, eine Erfassungseinrichtung und eine Auswerte-/Steuereinrichtung, wobei die Erfassungseinrichtung und die Auswerte-/Steuereinrichtung datenübertragend verbunden sind.

Erfindungsgemäß wird die Aufgabe durch ein Verfahren zur Entkalkung des Kaffeeautomaten gelöst, bei dem für die Entkalkung des Fluidsystems relevante Parameter von einer Erfassungseinrichtung erfasst und an eine Auswerte-/Steuereinrichtung übermittelt werden und die Auswerte-/Steuereinrichtung anhand der für die Entkalkung relevanten Parameter Anteile der routinemäßigen Entkalkung auswertet, und festlegt, welcher erste Anteil der ersten Fluidleitung zugeteilt wird und welcher zweite Anteil der zweiten Fluidleitung zugeteilt wird. Die Anteile werden dadurch nicht länger einer vorab festgelegten und immer gleichen Menge entsprechend bemessen, sondern anhand der relevanten Parameter zugeteilt. Daher können die Anteile spezifisch auf den tatsächlich aktuell vorliegenden Bedarf für jede Leitung hin angepasst werden. Dadurch kann verhindert werden, dass für eine einzelne, weniger stark oder kaum verkalkte Fluidleitung, ein unnötig großer Anteil, z.B. eine unnötig große Menge an Entkalkungsmittel, eingesetzt wird. Zudem kann auch einer überdurchschnittlich häufig verwendeten und daher stärker verkalkten Fluidleitung ein größerer Anteil, z.B. eine größere Menge an Entkalkungsmittel, zugeteilt werden. Somit zeichnet sich das erfindungsgemäße Verfahren nicht nur dadurch aus, dass ein besonders nachhaltiges Entkalken ermöglicht, sondern auch dadurch, dass selbst bei von einer durchschnittlichen Nutzung abweichenden einseitigen Nutzung, eine langfristig einwandfreie Entkalkung gewährleistet werden kann.

Bei einer vorteilhaften Weiterbildung des erfindungsgemäßen Verfahrens unterscheiden sich die Anteile, insbesondere der erste Anteil und der zweite Anteil, in einer Menge an Entkalkungsmittel oder Entkalkungslösung, einer Einwirkzeit und/ oder einer Temperatur. Dadurch kann z.B. eine einzelne, ausweislich der relevanten Parameter stärker verkalkte der Fluidleitungen, z.B. die erst Fluidleitung, mit einem größeren Anteil, hier einer größeren Menge an Entkalkungsmittel oder Entkalkungslösung, einer größeren Einwirkzeit und/ oder einer höheren Temperatur, beaufschlagt werden, ohne dass eine andere Entkalkungstablette dafür nötig wäre. Hingegen kann z.B. eine ausweislich der relevanten Parameter viel weniger stark verkalkte zweite Fluidleitung mit einem entsprechend geringeren Anteil, hier einer geringeren Menge an Entkalkungsmittel oder Entkalkungslösung, einer geringeren Einwirkzeit und/ oder einer niedrigeren Temperatur, beaufschlagt werden, da die weniger starke Verkalkung hierdurch noch ausreichend entfernt wird. Insbesondere bei Kaffeeautomaten, bei denen der Abstand des Entkalkungsturnus durch eine sogenannte Einrichtung zur Verkalkungserkennung bestimmt wird, kann eine langfristig einwandfreie Entkalkung dadurch bei weniger häufigem entkalken und somit langfristig besonders nachhaltig verringertem Entkalkungsmitteleinsatz gewährleistet werden.

Bei einer weiteren vorteilhaften Weiterbildung des erfindungsgemäßen Verfahrens ergibt die Summe aller Anteile 100 % der routinemäßigen Entkalkung. Dadurch kann erreicht werden, dass insgesamt weder eine größere Menge an Entkalkungsmittel eingesetzt, noch eine längere Gesamteinwirkzeit abgewartet oder ein durch insgesamt höhere Temperaturen erhöhter Energieeinsatz für eine Entkalkung aufgewendet werden muss. Bei von einer durchschnittlichen Nutzung abweichenden einseitigen Nutzung, wenn z.B. Ausschließlich Espresso bezogen wird, kann die erste Fluidleitung erheblich stärker verkalkt sein und die, z.B. nur für Milchschaum erforderliche, zweite Fluidleitung überhaupt nicht verkalkt sein. Die für die zweite Fluidleitung nicht benötigte Menge an Entkalkungsmittel kann der ersten Fluidleitung zugeteilt werden und die Anteile anhand der für die Entkalkung relevanten Parameter unterschiedlich festgelegt werden und dennoch in Summe aller Anteile 100 % ergeben. Dadurch kann mit der gleichen Entkalkungstablette bei gleicher Gesamtdauer und gleichem Energieeinsatz, selbst bei der von der durchschnittlichen Nutzung abweichenden einseitigen Nutzung, eine langfristig einwandfreie Entkalkung besonders nachhaltig gewährleistet werden.

Bei einer weiteren vorteilhaften Weiterbildung des erfindungsgemäßen Verfahrens entspricht mindestens einer der Anteile, insbesondere der erste Anteil oder der zweite Anteil, 0 %. Dadurch kann einer besonders einseitigen Nutzung, bei welcher eine der Fluidleitungen, z.B. die zweite Fluidleitung, seit einer vorhergehenden Entkalkung nicht benutzt wurde, weil seit der vorhergehenden Entkalkung kein Milchschaum bezogen wurde, Rechnung getragen werden. Durch diese einseitige Nutzung ist eine Entkalkung der zweiten Fluidleitung nicht nötig und demgemäß die erste Fluidleitung verhältnismäßig stark beansprucht worden und daher übermäßig stark verkalkt. Da der zweite Anteil 0% ist, können z.B. für die Entkalkung der übermäßig stark verkalkten ersten Fluidleitung die vollen 100% verwendet werden. Gleichermaßen kann eine Verwendung von Entkalkungsmittel für die Entkalkung der ersten Fluidleitung, die hier überhaupt nicht nötig ist, besonders nachhaltig vermieden werden.

Bei einer weiteren vorteilhaften Weiterbildung des erfindungsgemäßen Verfahrens entstammt mindestens einer der Anteile, insbesondere der erste Anteil oder der zweite Anteil, einem Bereich von größer als 0 % bis kleiner als 50 %. Dadurch kann, insbesondere bei zwei Fluidleitungen, einer einseitigen Nutzung, die jedoch im Vergleich zu einer besonders einseitigen Nutzung weniger stark von einer durchschnittlichen Nutzung abweicht, Rechnung getragen werden. Beispielsweise kann bei einer Nutzung, bei der seit der vorhergehenden Entkalkung nur sehr selten Milchschaum bezogen wurde eine von Null unterschiedlicher aber vergleichsweise sehr geringer Anteil für die Entkalkung der zweiten Fluidleitung zwar nötig, jedoch für eine erfolgreiche Entkalkung ausreichend sein. Gleichermaßen kann ein größerer Anteil für die demgemäß stärker verkalkte erste Fluidleitung verwendet werden. Dies ermöglicht, insbesondere bei zwei Fluidleitungen, eine besonders effektive und gleichzeitig sehr nachhaltige Entkalkung.

Bei einer weiteren vorteilhaften Weiterbildung des erfindungsgemäßen Verfahrens entstammt mindestens einer der Anteile, insbesondere der erste Anteil oder der zweite Anteil, einem Bereich von größer als 0 % bis kleiner als 33 %. Dadurch kann, insbesondere bei drei Fluidleitungen, einer einseitigen Nutzung (weniger stark von einer durchschnittlichen Nutzung abweichend als eine besonders einseitige Nutzung), Rechnung getragen werden. Dies ermöglicht, insbesondere bei drei Fluidleitungen, eine besonders effektive und gleichzeitig sehr nachhaltige Entkalkung.

Bei einer weiteren vorteilhaften Weiterbildung des erfindungsgemäßen Verfahrens ist einer der relevanten Parameter ein seit einer vorhergehenden Entkalkung durch mindestens eine der mindestens zwei Fluidleitungen gefördertes Fluidvolumen. Dadurch kann mit vergleichsweise noch einfachen Mitteln sehr präzise festgestellt werden, welche der mindestens zwei Fluidleitungen wie stark verkalkt ist. Folglich kann auch die Zuteilung des ersten Anteils und des zweiten Anteils besonders präzise erfolgen. Daher können die Anteile besonders genau dem tatsächlich aktuell vorliegenden Bedarf für jede Leitung entsprechen und so die einwandfreie Entkalkung besonders nachhaltig gewährleistet werden.

Bei einer weiteren vorteilhaften Weiterbildung des erfindungsgemäßen Verfahrens ist einer der relevanten Parameter eine seit einer vorhergehenden Entkalkung erfasste summarische Häufigkeit des Aufrufs mindestens eines vorbestimmten Programms, insbesondere zur Zubereitung eines spezifischen Kaffeegetränks und/oder einer vorbestimmten Spülfunktion. Dadurch kann mit sehr einfachen Mitteln ausreichend genau festgestellt werden, welche der mindestens zwei Fluidleitungen wie stark verkalkt ist. Daher können die Anteile ausreichend genau dem tatsächlich aktuell vorliegenden Bedarf für jede Leitung entsprechen, ohne dass Mittel zur präziseren Feststellung hergestellt und verwendet werden müssen, was sich besonders Vorteilhaft auf die nachhaltig auswirkt.

Die eingangs genannte Aufgabe wird auch durch einen Kaffeeautomaten gelöst, der ein Fluidsystem aufweist, das mindestens zwei Fluidleitungen umfasst, und der eine Erfassungseinrichtung und eine Auswerte-/Steuereinrichtung aufweist, wobei die Auswerte-/Steuereinrichtung zur Durchführung des vorhergehend beschriebenen Verfahrens eingerichtet und programmiert ist. Die vorgenannten Vorteile können somit schon dadurch erreicht werden, dass die Auswerte-/Steuereinrichtung eines ansonsten üblichen Kaffeeautomaten ohne weiteren Zusatzaufwand entsprechend eingerichtet und programmiert wird. Daher können die vorgenannten Vorteile erreicht werden, ohne dass hierfür weitere Mittel oder Einrichtungen hergestellt und verwendet werden müssen, was sich ebenfalls besonders Vorteilhaft auf die nachhaltig auswirkt.

Des Weiteren wird die eingangs genannte Aufgabe auch durch ein Computerprogrammprodukt gelöst, das Befehle umfasst, die bei der Ausführung des Programms durch eine Auswerte-/Steuereinrichtung eines Kaffeeautomaten, insbesondere des vorhergehend beschriebenen Kaffeeautomaten, die Auswerte-/Steuereinrichtung veranlassen, das vorhergehend beschriebene Verfahren auszuführen. Dadurch kann auch ein geeigneter herkömmlicher Kaffeeautomat mittels des erfindungsgemäßen Computerprogrammprodukts, z.B. durch herunterladen einer entsprechenden App aus dem Internet, in die Lage versetzt werden, von den vorgenannten Vorteilen zu profitieren. Hierfür muss an Sich nicht einmal ein neuer Kaffeeautomat hergestellt werden, was eine besonders nachhaltige Lösung der eingangs genannten Aufgabe ermöglicht.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Vorstehend genannte und nachfolgend noch zu nennende Bestandteile einer übergeordneten Einheit, wie z.B. einer Einrichtung, einer Vorrichtung oder einer Anordnung, die separat bezeichnet sind, können separate Bauteile bzw. Komponenten dieser Einheit bilden oder integrale Bereiche bzw. Abschnitte dieser Einheit sein, auch wenn dies in der Zeichnung anders dargestellt ist.

Ein bevorzugtes Ausführungsbeispiel der Erfindung ist in der Zeichnung dargestellt und wird in der nachfolgenden Beschreibung näher erläutert.

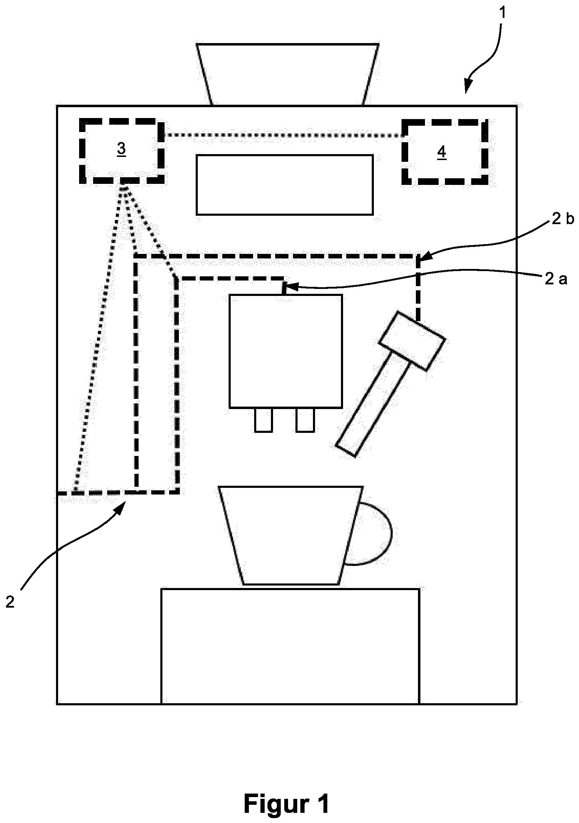

Die einzige Figur 1 zeigt einen erfindungsgemäßen Kaffeeautomaten.

Entsprechend der Figur 1 weist ein erfindungsgemäßer Kaffeeautomat 1 ein Fluidsystem 2 mit mindestens einer ersten Fluidleitung 2a und einer zweiten Fluidleitung 2b auf. Des Weiteren besitzt der erfindungsgemäße Kaffeeautomat 1 eine Erfassungseinrichtung 3 sowie eine Auswerte-/Steuereinrichtung 4, wobei über die Erfassungseinrichtung 3 relevante Parameter für eine routinemäßige Entkalkung erfassbar sind. Diese Parameter können indirekt einen Verkalkungsgrad betreffen, oder aber ein seit einer vorhergehenden Entkalkung gefördertes Fluidvolumen oder eine Anzahl vorbestimmter durchgeführter Programme. Im dargestellten Beispiel erfasst die Erfassungseinrichtung 3 als relevante Parameter das seit der vorhergehenden Entkalkung geförderte Fluidvolumen durch das Fluidsystem 2 einerseits sowie andererseits jeweils durch die erste Fluidleitung 2a und die zweite Fluidleitung 2b (schematisch dargestellt durch gestrichelte Linien). Dabei führt die die erste Fluidleitung 2a zu einem Kaffeeauslass und die zweite Fluidleitung 2b zu einem Milchschaumauslass, die beide in eine Tasse gerichtet werden können.

Die Erfassungseinrichtung 3 ist dabei datenübertragend mit der Auswerte-/Steuereinrichtung 4 verbunden. In die Auswerte-/Steuereinrichtung 4 ist ein Computerprogrammprodukt geladen, das Befehle umfasst, die beim Ausführen des Programms die Auswerte-/Steuereinrichtung 4 veranlasst, das erfindungsgemäße Verfahren zur Entkalkung des Kaffeeautomaten 1 durchzuführen. Zur Anwendung gelangt dies bei einer routinemäßigen Entkalkung des Kaffeeautomaten 1. Die Auswerte-/Steuereinrichtung 4 wertet das seit der vorhergehenden Entkalkung geförderte Fluidvolumen durch das Fluidsystem 2 aus. Dies geschieht wie bei den meisten herkömmlichen Automaten mittels des Signals eines nicht dargestellten Flowmeters am Anfang des Fluidsystems 2 in der Nähe einer nicht dargestellten Förderpumpe. Da ein vorbestimmter Grenzwert für das geförderte Fluidvolumen durch das Fluidsystem 2 bei der eingestellten Wasserhärte erreicht ist, wertet die Auswerte-/Steuereinrichtung 4 aus, dass eine routinemäßige Entkalkung des Kaffeeautomaten 1 durchgeführt werden muss.

Die Erfassungseinrichtung 3 erfasst das seit der vorhergehenden Entkalkung geförderte Fluidvolumen jeweils durch die erste Fluidleitung 2a und die zweite Fluidleitung 2b durch ein Erfassen der summarischen Häufigkeit der in diesem Zeitraum bezogenen verschiedenen Kaffeegetränke, worunter hier auch ein Milchschaumbezug verstanden werden soll. Die Menge je verschiedenem Getränk, sowie die Information, welche der Fluidleitungen 2a und 2b mit der Menge für das spezifische beaufschlagt wurde, sind in der Auswerte-/Steuereinrichtung 4 hinterlegt. Über die datenübertragende Verbindung zwischen der Erfassungseinrichtung 3 und der Auswerte-/Steuereinrichtung 4 kann eine Auswertung der Anzahl und der Information erfolgen und so das jeweils geförderte Fluidvolumen durch die erste Fluidleitung 2a und die zweite Fluidleitung 2b erfasst werden.

Anhang des jeweils geförderten Fluidvolumens durch die erste Fluidleitung 2a und die zweite Fluidleitung 2b als relevante Parameter wertet die Auswerte-/Steuereinrichtung 4 die jeweils benötigten Anteile der routinemäßigen Entkalkung aus und legt fest, welcher erste Anteil der ersten Fluidleitung 2a zugeteilt wird und welcher zweite Anteil der zweiten Fluidleitung 2b der zugeteilt wird. Da im vorliegenden Beispiel seit der vorhergehenden Entkalkung kein Milchschaum bezogen wurde, weder alleine, noch in einem Milchmischgetränk, wurde die zweite Fluidleitung 2b nicht beansprucht, sodass sie auch keine Verkalkung erfahren hat. Demnach wurde auch die erste Fluidleitung 2a überdurchschnittlich beansprucht, sodass sie auch eine überdurchschnittliche Verkalkung erfahren hat. Daher legt die Auswerte-/Steuereinrichtung 4 fest, dass der zweiten Fluidleitung 2b der zweite Anteil von 0 % der Entkalkungslösung zugeteilt wird. Da sich das Fluidsystem 2 im vorliegenden Beispiel nur in die erste Fluidleitung 2a und die zweite Fluidleitung 2b aufteilt und die Summe aller Anteile im vorliegenden Beispiel 100 % der routinemäßigen Entkalkung ergibt, legt die Auswerte-/Steuereinrichtung 4 fest, dass der ersten Fluidleitung 2a der erste Anteil von 100 % der Entkalkungslösung zugeteilt wird.

Bei der Durchführung des Verfahren zur Entkalkung eines Kaffeeautomaten wird im vorliegenden Beispiel daher kein Entkalkungsmittel respektive keine Entkalkungslösung für eine unnötige Entkalkung der zweite Fluidleitung 2b verschwendet, wie es bei herkömmlichen Automaten der Fall wäre. Dadurch steht jedoch auch für die dringend nötige Entkalkung der überdurchschnittlich stark verkalkten ersten Fluidleitung 2a die doppelte Menge an Entkalkungsmittel respektive Entkalkungslösung zur Verfügung.

Mit dem erfindungsgemäßen Verfahren, dem erfindungsgemäßen Computerprogrammprodukt und dem erfindungsgemäßen Kaffeeautomaten 1 lässt sich so eine deutlich verbesserte und zuverlässige Entkalkung erreichen, wodurch sich ein Kaffeeerlebnis des Nutzers verbessert, die Lebensdauer des Kaffeeautomaten 1 verlängert und zugleich eine verbesserte Nachhaltigkeit erzielt wird, da kein Entkalkungsmittel respektive keine Entkalkungslösung verschwendet wird. Auch kann dadurch langfristig die zuverlässige Entkalkung mit weniger Entkalkungsmitteleinsatz erreicht werden, was die Nachhaltigkeit weiter verbessert.

### Bezugszeichen

- 1: Kaffeeautomat
- 2: Fluidsystem
- 2a: erste Fluidleitung
- 2b: zweite Fluidleitung
- 3: Erfassungseinrichtung
- 4: Auswerte-/Steuereinrichtung

## Patentansprüche

1. Verfahren zur Entkalkung eines Kaffeeautomaten (1), der ein Fluidsystem (2) mit mindestens zwei Fluidleitungen (2a, 2b), eine Erfassungseinrichtung (3) und eine Auswerte-/Steuereinrichtung (4) umfasst und bei dem eine routinemäßige Entkalkung durchgeführt wird, wobei die Erfassungseinrichtung (3) und die Auswerte-/Steuereinrichtung (4) datenübertragend verbunden sind, wobei für eine Entkalkung des Fluidsystems (2), insbesondere der zwei Fluidleitungen (2a, 2b), relevante Parameter von einer Erfassungseinrichtung (3) erfasst und an eine Auswerte-/Steuereinrichtung (4) übermittelt werden, **dadurch gekennzeichnet, dass** die Auswerte-/Steuereinrichtung (4) anhand der für die Entkalkung relevanten Parameter Anteile der routinemäßigen Entkalkung auswertet, und festlegt, welcher erste Anteil einer ersten Fluidleitung (2a) der mindestens zwei Fluidleitungen (2a, 2b) zugeteilt wird und welcher zweite Anteil einer zweiten Fluidleitung (2b) der mindestens zwei Fluidleitungen (2a, 2b) zugeteilt wird.

2. Verfahren nach Anspruch 1, **dadurch gekennzeichnet, dass** sich die Anteile, insbesondere der erste Anteil und der zweite Anteil unterscheiden, in einer Menge an Entkalkungsmittel oder Entkalkungslösung, einer Einwirkzeit und/ oder einer Temperatur.

3. Verfahren nach Anspruch 1 oder 2, **dadurch gekennzeichnet, dass** die Summe aller Anteile 100 % der routinemäßigen Entkalkung ergibt.

4. Verfahren nach einem der Ansprüche 1 bis 3, **dadurch gekennzeichnet, dass** mindestens einer der Anteile, insbesondere der erste Anteil oder der zweite Anteil, 0 % entspricht.

5. Verfahren nach einem der Ansprüche 1 bis 3, **dadurch gekennzeichnet, dass** mindestens einer der Anteile, insbesondere der erste Anteil oder der zweite Anteil, einem Bereich von größer als 0 % bis kleiner als 50 % entstammt.

6. Verfahren nach einem der Ansprüche 1 bis 3, **dadurch gekennzeichnet, dass** mindestens einer der Anteile, insbesondere der erste Anteil oder der zweite Anteil, einem Bereich von größer als 0 % bis kleiner als 33 % entstammt.

7. Verfahren nach einem der vorhergehenden Ansprüche, **dadurch gekennzeichnet, dass** einer der relevanten Parameter ein seit einer vorhergehenden Entkalkung durch mindestens eine der der mindestens zwei Fluidleitungen gefördertes Fluidvolumen ist.

8. Verfahren nach einem der vorhergehenden Ansprüche, **dadurch gekennzeichnet, dass** einer der relevanten Parameter eine seit einer vorhergehenden Entkalkung erfasste summarische Häufigkeit des Aufrufs mindestens eines vorbestimmten Programms, insbesondere zur Zubereitung eines spezifischen Kaffeegetränks und/oder einer vorbestimmten Spülfunktion, ist.

9. Kaffeeautomat (1), mit einem Fluidsystem (2), das mindestens zwei Fluidleitungen (2a, 2b) umfasst, einer Erfassungseinrichtung (3) und einer Auswerte-/Steuereinrichtung (4), **dadurch gekennzeichnet, dass** die Auswerte-/Steuereinrichtung (4) zur Durchführung des Verfahren nach einem der vorhergehenden Ansprüche eingerichtet und programmiert ist.

10. Computerprogrammprodukt, umfassend Befehle, die bei der Ausführung des Programms durch einer Auswerte-/Steuereinrichtung (4) eines Kaffeeautomaten (1), insbesondere nach Anspruch 9, die Auswerte-/Steuereinrichtung (4) veranlassen, das Verfahren nach einem der Ansprüche 1 bis 8 auszuführen.
